(19) Europäisches Patentamt
European Patent Office
Office européen des brevets

(11) **EP 4 378 782 A1**

(12) **EUROPEAN PATENT APPLICATION**
published in accordance with Art. 153(4) EPC

(43) Date of publication:
**05.06.2024 Bulletin 2024/23**

(21) Application number: **22876518.6**

(22) Date of filing: **30.09.2022**

(51) International Patent Classification (IPC):
**B60W 30/14** (2006.01)     **G08G 1/16** (2006.01)

(52) Cooperative Patent Classification (CPC):
**B60W 30/14; B60W 60/00; G08G 1/16**

(86) International application number:
**PCT/JP2022/036618**

(87) International publication number:
**WO 2023/054655 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021   JP 2021160496**

(71) Applicant: **AISIN CORPORATION**
**Kariya-shi, Aichi 448-8650 (JP)**

(72) Inventor: **HIROTA, Tomoaki**
**Kariya-shi, Aichi 448-8650 (JP)**

(74) Representative: **Kramer Barske Schmidtchen**
**Patentanwälte PartG mbB**
**European Patent Attorneys**
**Landsberger Strasse 300**
**80687 München (DE)**

(54) **PRECEDING VEHICLE DETERMINATION SYSTEM**

(57)     There is provided a preceding vehicle determination system that can suppress a reduction in the accuracy of detection of a preceding vehicle. The preceding vehicle determination system includes: a vehicle-ahead's location obtaining part that obtains a relative location of a vehicle ahead with respect to a vehicle, the vehicle ahead being located ahead of the vehicle; a map information obtaining part that obtains map information including a road geometry of a road on which the vehicle travels; and a preceding vehicle determining part that determines, when the vehicle ahead is located in a predetermined zone, that the vehicle ahead is a vehicle preceding the vehicle, the predetermined zone extending along the road geometry and ahead of the vehicle.

*FIG. 1*

**Description**

TECHNICAL FIELD

The present invention relates to a preceding vehicle determination system.

BACKGROUND ART

Conventionally, it is known that an in-vehicle camera is used in order to detect a preceding vehicle located ahead of a host vehicle. Patent Literature 1 describes a vehicle control device that detects, from an image shot with a CCD camera or a nearinfrared camera, left and right lane markings (e.g., white lines) in a driving lane in which a host vehicle travels, and determines (detects) the presence of a preceding vehicle, based on the detected lane markings.

CITATIONS LIST

PATENT LITERATURE

Patent Literature 1: JP 6589760 B2

SUMMARY OF INVENTION

TECHNICAL PROBLEMS

When lane markings are detected by image recognition by the in-vehicle camera as does the vehicle control device described in Patent Literature 1, the accuracy of recognition of white lines may decrease at a distant location or a curve. When the accuracy of recognition of white lines thus decreases, the accuracy of recognition of a preceding vehicle based on white lines decreases. If, for example, following control in which the host vehicle follows a preceding vehicle is performed with the accuracy of recognition of a preceding vehicle being reduced, then an inconvenience can occur, e.g., detection of a preceding vehicle is delayed or a vehicle determined to be a preceding vehicle just a moment ago is no longer determined to be a preceding vehicle (in other words, losing sight of a preceding vehicle).

The present invention is made in view of the above-described problems, and provides a preceding vehicle determination system that can suppress a reduction in the accuracy of detection of a preceding vehicle.

SOLUTIONS TO PROBLEMS

To provide the above-described preceding vehicle determination system, the preceding vehicle determination system includes: a vehicle-ahead's location obtaining part that obtains a relative location of a vehicle ahead with respect to a vehicle, the vehicle ahead being located ahead of the vehicle; a map information obtaining part that obtains map information including a road geometry of a road on which the vehicle travels; and a preceding vehicle determining part that determines, when the vehicle ahead is located in a predetermined zone, that the vehicle ahead is a vehicle preceding the vehicle, the predetermined zone extending along the road geometry and ahead of the vehicle.

Namely, the preceding vehicle determination system determines, based on map information, whether a vehicle located ahead of a vehicle (host vehicle) is a preceding vehicle. Specifically, a relative location of a vehicle ahead with respect to the host vehicle is obtained, and when the vehicle ahead is located in a predetermined zone extending along a road geometry included in the map information, the vehicle ahead is determined to be a preceding vehicle. That is, the location of the vehicle ahead is identified based on the road geometry indicated by the map information, in addition to obtaining of the relative location of the vehicle ahead using a camera, etc. This makes it unnecessary to detect white lines by a camera, etc., at a distant location or on a curved section. Although there is a need to detect the relative location of the vehicle ahead by a camera, etc., an image of a vehicle is larger than white lines for the same distance, and even if the vehicle ahead is present at a distant location or on a curved section, the accuracy of detection does not decrease compared to that of white lines. Hence, compared to a configuration in which a lane area is identified at a distant location or on a curved section based on white lines, a reduction in the accuracy of detection of a preceding vehicle can be suppressed.

BRIEF DESCRIPTION OF DRAWINGS

FIG. 1 is a block diagram showing a configuration of a preceding vehicle determination system.
FIG. 2A is a diagram showing an example of a shot camera image and FIG. 2B is a plan view including a vehicle width axis and a vehicle longitudinal axis.
FIGS. 3A, 3B, and 3C are schematic diagrams for identifying a linear section, and FIG. 3A shows an example of identifying a linear section based on nodes or shape interpolation points, FIG. 3B shows an example of identifying a linear section based on the radius of curvature, and FIG. 3C is another example of identifying a linear section based on the radius of curvature.
FIG. 4A is an example of determining a preceding vehicle by linear logic and FIG. 4B is an example of determining a preceding vehicle by curve logic.
FIG. 5 is a flowchart showing an example of control of the present embodiment.
FIG. 6 is a subroutine showing exemplary control for detecting a preceding vehicle.
FIGS. 7A, 7B, 7C, 7D, and 7E are schematic diagrams for describing a condition for terminating following travel control, and FIG. 7A is an example of a linear road, FIG. 7B is an example of a curved section with one lane in each direction, FIG. 7C is an example of a curved section with two lanes in each direction, FIG. 7D is an example of an intersection, and FIG. 7E is an example of a location near a narrow-angle fork.

DESCRIPTION OF EMBODIMENTS

Here, an embodiment of the present invention will be described in accordance with the following order:

(1) Configuration of a preceding vehicle determination system;
(2) Preceding vehicle determination process; and
(3) Other embodiments.

(1) Configuration of a preceding vehicle determination system:

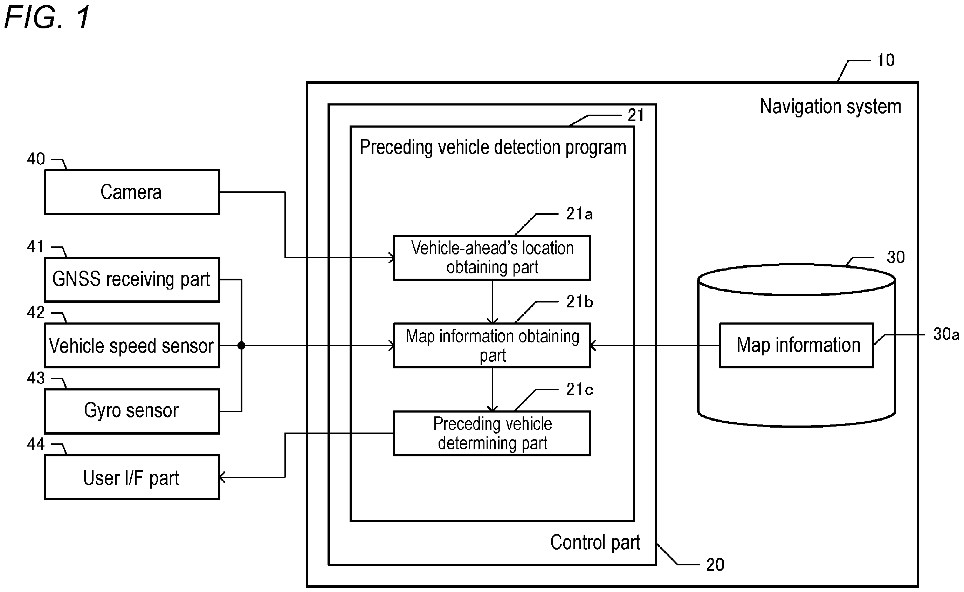

FIG. 1 is a block diagram showing a configuration of a navigation system 10 including a preceding vehicle determination system according to one embodiment of the present invention. The navigation system 10 is provided in a vehicle and includes a control part 20 including a CPU, a RAM, a ROM, etc., and a recording medium 30. The navigation system 10 can execute, by the control part 20, various programs stored in the recording medium 30 or the ROM. As one of the programs, the control part 20 can execute a preceding vehicle determination program 21. The recording medium 30 has map information 30a recorded therein in advance.

The map information 30a is information used to, for example, identify the locations of intersections or provide route guidance, and includes: node data representing the locations, etc., of nodes set on roads on which the vehicle travels; shape interpolation point data representing the locations, etc., of shape interpolation points for identifying a geometry of a road between nodes; link data representing a link between nodes; ground object data representing the locations, shapes, etc., of ground objects present on roads or around the roads; and the like. Note that, in the present embodiment, the nodes represent, for example, intersections.

In addition, link data is associated with information indicating the number of lanes present on a road section represented by the link data, and the widths of the lanes. In the present embodiment, a location indicated by a node or a shape interpolation point indicates the location of a center line on a road section, and by the location, the number of lanes, and the widths of the lanes, the locations of the lanes and an area in which the lanes are present can be identified.

The vehicle including the navigation system 10 is referred to as a host vehicle in the following description. The host vehicle of the present embodiment includes a camera 40, a GNSS receiving part 41, a vehicle speed sensor 42, a gyro sensor 43, and a user I/F part 44. The camera 40 is a device that obtains an image in a field of view oriented toward the front of the host vehicle. An optical axis of the camera 40 is fixed on the host vehicle, and the direction of the optical axis is to be known by the navigation system 10. In the present embodiment, the center of the optical axis of the camera 40 is perpendicular to a vehicle width direction of the host vehicle and passes through the vehicle's center in the vehicle width direction. In addition, the camera 40 is mounted on the host vehicle in a posture in which an area ahead in a traveling direction of the host vehicle is included in the field of view. The control part 20 obtains an image outputted from the camera 40 and analyzes the image by extraction of features, etc., by which another vehicle present around the host vehicle can be detected. Note that the camera 40 may be a conventionally known in-vehicle camera and, for example, a monocular camera or a stereo camera is used.

The GNSS receiving part 41 is a device that receives Global Navigation Satellite System signals, and receives radio waves from navigation satellites and outputs, through an interface which is not shown, a signal for calculating a current location of the host vehicle. The control part 20 obtains the signal, thereby obtaining a current location (latitude, longitude, etc.) of the host vehicle in a map coordinate system. The vehicle speed sensor 42 outputs a signal corresponding to the rotational speed of wheels provided on the host vehicle. The control part 20 obtains the signal through an interface which is not shown, thereby obtaining vehicle speed. The gyro sensor 43 detects angular acceleration of the host vehicle for a turn in a horizontal plane, and outputs a signal corresponding to the orientation of the host vehicle. The control part 20 obtains the signal, thereby obtaining a traveling direction of the host vehicle. The vehicle speed sensor 42, the gyro sensor 43, and the like are used to identify a travel path of the host vehicle, and in the present embodiment, a current location is identified based on a point of departure and the travel path of the host vehicle, and the current location of the host vehicle identified based on the point of departure and the travel path is corrected based on an output signal from the GNSS receiving part 41.

The user I/F part 44 is an interface part for accepting, as input, instructions from a user and providing various types of information to the user, and includes a touch panel type display, a speaker, etc., which are not shown. Namely, the user I/F part 44 includes an output part for images and audio and an input part for instructions from the user.

By a function of a navigation program which is not shown, the control part 20 accepts input of a destination performed by the user through the input part of the user I/F part 44 which is not shown, and searches for a planned travel route from a current location of the host vehicle to the destination, based on the map information 30a. In addition, by a function of the navigation program, the control part 20 controls the user I/F part 44 to provide guidance for traveling along the planned travel route. In the present embodiment, as an additional function of the navigation program, it is possible to estimate the location and behavior of another vehicle present around the host vehicle, such as a vehicle located ahead of the host vehicle, and provide guidance on the location and behavior of another vehicle, and the guidance is implemented by the preceding vehicle determination program 21.

To implement the guidance, the preceding vehicle determination program 21 includes a vehicle-ahead's location obtaining part 21a, a map information obtaining part 21b, and a preceding vehicle determining part 21c. The vehicle-ahead's location obtaining part 21a is a program module that allows the control part 20 to implement a function of obtaining a relative location of another vehicle located ahead of the host vehicle (i.e., a vehicle ahead) with respect to the host vehicle. In the present embodiment, the control part 20 obtains a relative location (a relative orientation and a straight-line distance) of the vehicle ahead with respect to the host vehicle, based on an image shot with the camera 40.

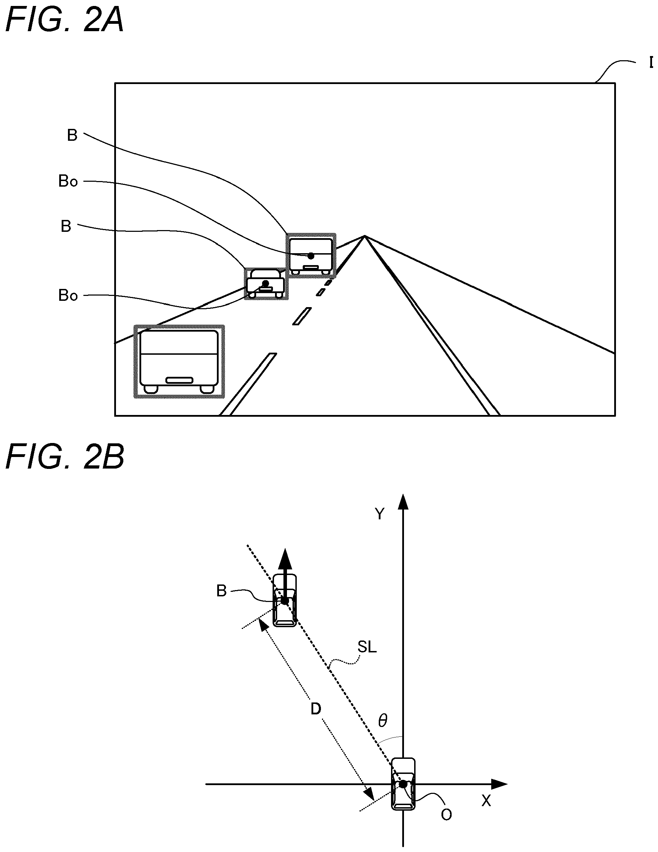

The control part 20 identifies, from a camera image, a rectangular vehicle region including a vehicle ahead, i.e., a bounding box. Specifically, images that are shot continuously with the camera 40 are obtained and are subjected to lens distortion correction, etc. In addition, the control part 20 determines whether features of a vehicle (e.g., a truck, a passenger car, or a motorcycle) are included in a camera image by performing an image recognition process that uses, for example, You Only Look Once (YOLO) or pattern matching, and detects an image of a vehicle located ahead of the host vehicle. FIG. 2A is a diagram showing an example of an image I having been shot with the camera 40 and having been subjected to distortion correction. As shown in FIG. 2A, in the present embodiment, a bounding box B is a rectangular region that is detected from the image I and that encloses a vehicle ahead.

Obtaining of a relative location of a vehicle ahead will be described more specifically. The control part 20 first estimates a relative orientation of a vehicle ahead located ahead (including other vehicles around the host vehicle) with respect to the location of the host vehicle, and a distance from the host vehicle to the vehicle ahead. Then, the control part 20 estimates a location, on a road, of the vehicle ahead with respect to the location of the host vehicle, and identifies a driving lane of the vehicle ahead from the location, on the road, of the vehicle ahead.

A process for identifying a driving lane will be described. The size and location of a bounding box B are represented by, for example, the coordinates of an upper left vertex and the coordinates of a lower right vertex of the bounding box B. The control part 20 obtains a height h (the number of pixels) of the bounding box B and representative coordinates Bo (x, y) of the bounding box B from the coordinates of the two diagonal vertices of the bounding box. The representative coordinates Bo are, for example, the coordinates of the center of the bounding box B (the midpoint in a width direction and in a height direction). The control part 20 identifies a relative orientation of a vehicle ahead as viewed from the host vehicle, based on the location of the representative coordinates Bo of the bounding box. In addition, the control part 20 identifies a distance from the host vehicle to the vehicle ahead, based on the height h of the bounding box B and the type of the vehicle ahead.

Specifically, each set of coordinates in the image I is associated with a relative orientation of an object shown at the set of coordinates with respect to the host vehicle, and information indicating the correspondence is recorded in the recording medium 30. Based on the correspondence, the control part 20 obtains a relative orientation of a vehicle ahead shown at the representative coordinates Bo. In the present embodiment, the control part 20 uses a vehicle coordinate system with respect to the vehicle. The vehicle coordinate system is a coordinate system defined by a vehicle width axis (an axis in a vehicle's left-right direction (an X-axis of FIG. 2B) and a vehicle longitudinal axis (an axis in a vehicle's front-rear direction (a Y-axis of FIG. 2B) which are orthogonal to each other.

FIG. 2B shows a plane including the vehicle width axis and the vehicle longitudinal axis. A point O in this FIG. 2B is the origin, in the vehicle coordinate system, of the vehicle. In an example of FIG. 2B, the vehicle longitudinal axis is parallel to the front-rear direction of the host vehicle. When the host vehicle travels on a linear road section, the vehicle longitudinal axis is parallel to a link indicating the road section. A relative orientation is represented by, for example, an angle ($\theta$) formed by a line segment SL that connects the origin of the vehicle coordinate system to a point corresponding to the representative coordinates Bo, and the vehicle longitudinal axis (e.g., when $\theta$ has a negative value, it indicates the left side of the vehicle longitudinal axis when facing ahead in a traveling direction, and when $\theta$ has a positive value, it indicates the right side).

Furthermore, the control part 20 identifies a type of the vehicle ahead in the bounding box B by an object recognition process. The type of the vehicle ahead is a type indicating the size of a car body, and may be categorized into types: e.g., a truck, a passenger car, and a motorcycle. In addition, in the present embodiment, for each type of a vehicle ahead, a representative vehicle height (e.g., 1.5 [m] for a passenger car) is defined. Furthermore, a straight-line distance between the host vehicle and a vehicle ahead and a height h of a bounding box B obtained when the vehicle ahead is shot with the camera 40 are measured in advance. For each type of vehicle, there is recorded, in the recording medium 30, information indicating a correspondence between the height h of a bounding box B and a straight-line distance with respect to the origin of the vehicle coordinate system.

For example, when the height of a bounding box that encloses a passenger car whose representative actual measurement of vehicle height is 1.5 [m] is an h1 pixel, the h1 pixel is associated with a straight-line distance of D1 [m], and when the height is an h2 pixel, the h2 pixel is associated with a straight-line distance of D2 [m]. For each of other types such as a truck and a motorcycle, too, information indicating a correspondence is stored in the recording medium 30. Based on the correspondence, the control part 20 calculates a straight-line distance D associated with the height h of a bounding box B. In the above-described manner, based on an image shot with the camera 40, the control part 20 obtains a relative orientation θ of a vehicle ahead included in the image I, and a straight-line distance D between the vehicle ahead and the host vehicle.

Based on the above-described relative orientation θ and straight-line distance D between the vehicle ahead and the host vehicle, the control part 20 identifies a location of the vehicle ahead with respect to a location of the host vehicle identified based on a signal from the GNSS receiving part 41. Namely, a relative location of the vehicle ahead is identified by a coordinate location defined by the vehicle longitudinal axis and the vehicle width axis, with the location of the host vehicle being the origin. As such, the control part 20 identifies a location of a vehicle ahead with respect to the host vehicle, based on the location and size of a bounding box (vehicle region) B included in the camera image I. In addition, the control part 20 performs a white line recognition process, based on a camera image. White line recognition is performed by, for example, performing semantic segmentation. Namely, the control part 20 inputs an image into a machine-trained model which is prepared in advance, thereby labeling, for each pixel, the pixel with the type of shot subject. The labels include white lines, and when pixels labeled as a white line around the host vehicle extend in a direction parallel to a traveling direction of the host vehicle and form a straight line or a broken line, the control part 20 considers the white line to be a lane boundary. In addition, for each set of coordinates of each pixel in the image, each pixel is associated in advance with a relative distance between a shot subject and the vehicle. The control part 20 can identify a relative distance in the vehicle width direction between a boundary in a lane in which the host vehicle travels and the host vehicle, by identifying the closest white line present on the left or right of the vehicle and identifying a relative distance. Note that a process of performing white line recognition may be Hough transform, image processing that extracts a feature of a white line, etc., in addition to semantic segmentation.

The control part 20 further detects a speed of a vehicle ahead, based on the speed of the host vehicle and the amount of change in the location of the vehicle ahead in a plurality of camera images shot at different timings. Specifically, the control part 20 recognizes a vehicle ahead in a plurality of camera images and identifies an amount of movement of the recognized vehicle ahead. Then, the control part 20 determines a relative speed of the vehicle ahead with respect to the vehicle from a time change between the plurality of camera images and the amount of movement of the vehicle ahead, and adds the speed of the host vehicle, thereby detecting a speed of the vehicle ahead. In addition, the control part 20 identifies the traveling direction and moving direction of the vehicle ahead by the above-described image recognition process that uses YOLO, pattern matching, etc.

The map information obtaining part 21b is a program module that allows the control part 20 to implement a function of obtaining road information indicating the location and road geometry of a road around a current location of the host vehicle. The control part 20 obtains a current location of the host vehicle in a map coordinate system, based on output signals from the GNSS receiving part 41, the vehicle speed sensor 42, and the gyro sensor 43 and the map information 30a. When the current location of the host vehicle is identified in this manner, the control part 20 obtains a road geometry (node data, link data, shape interpolation point data, the radius of curvature of a road, etc.) around the current location of the host vehicle. Note that the radius of curvature is determined in advance, for example, for every predetermined distance for a link.

The preceding vehicle determining part 21c is a program module that allows the control part 20 to implement a function of determining, when a vehicle ahead is located in a predetermined zone extending along a road geometry and ahead of the host vehicle, that the vehicle ahead is a vehicle preceding the host vehicle. Namely, the control part 20 identifies the above-described relative location of the vehicle ahead, and determines whether the vehicle ahead is located in a predetermined zone extending along a road geometry.

For the determination as to whether the vehicle ahead is located in the predetermined zone, it is identified whether the road geometry is a linear section or a curved section, and when the vehicle ahead is located in the predetermined zone on either one of the linear section and the curved section, the vehicle ahead is determined to be a vehicle preceding the host vehicle. Then, when the vehicle ahead is determined to be a preceding vehicle, following travel starts. Specific details of a process will be described below.

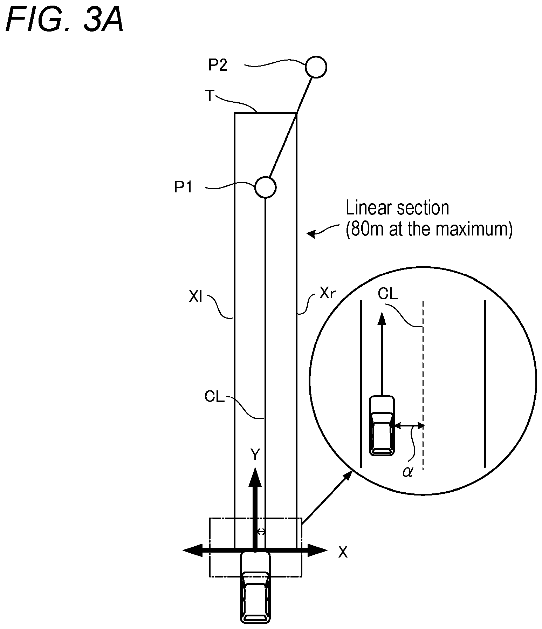

FIGS. 3A to 3C are diagrams for describing a process of identifying that a driving lane is a linear section, and it is identified that the driving lane is a linear section by at least one of means shown in these FIGS. 3A to 3C. FIG. 3A is an example of identifying a road geometry from shape interpolation points (P1 and P2) between nodes, and an area in a predetermined zone is identified to be a linear section from the road geometry identified based on the shape interpolation points. More specifically, the predetermined zone can be represented by a vehicle width direction (left-right direction) indicated by an X-axis, and a vehicle's traveling direction (vehicle's front-rear direction) indicated by a Y-axis. In the example shown in FIG. 3A, it is determined whether the host vehicle travels in a center line of a driving lane (hereinafter, referred to as lane's center line) CL, by recognition of a lane boundary (e.g., a white line) using a camera image. The lane's center line CL is the center of a general road width (e.g., 3.0 [m]), and thus, a spacing with a predefined distance (e.g., 1.5 [m]) is provided in each of the left and right vehicle width directions from the lane's center line CL. In other words, the distance from the lane's center line CL to a right edge Xr is equal to the distance from the lane's center line CL to a left edge Xl. Thus, when the center of a host vehicle Ve (vehicle's center) does not match the lane's center line CL (i.e., when the vehicle's center is displaced from the lane's center line), the predefined distance in the vehicle width direction is offset based on an amount corresponding to the displacement. Note that the displacement of the predefined distance in the left or right vehicle width direction from the lane's center line CL indicates that the vehicle's center is displaced from the lane's center, and thus, in other words, it can be said that the vehicle's center is offset by an amount corresponding to the displacement. For example, when the host vehicle (vehicle's center) is displaced to the left from the lane's center line CL as shown in FIG. 3A, if the vehicle width is 3.0 [m], then the distance from the lane's center line CL to the left edge Xl (the negative with the lane's center line CL being the origin) and the distance from the lane's center line CL to the right edge Xr (the positive with the lane's center line CL being the origin) are as follows:

$$\text{Right edge } Xr = 1.5 + \text{offset value } \alpha$$

$$\text{Left edge } Xl = -1.5 + \text{offset value } \alpha$$

In addition, when the host vehicle Ve is displaced to the right from the lane's center line CL, too, the above-described equations can be applied likewise. Note that the offset value $\alpha$ is a positive value when the host vehicle Ve is displaced to the left from the lane's center line CL, and the offset value $\alpha$ is a negative value when the host vehicle Ve is displaced to the right from the lane's center line CL. In this manner, the vehicle width direction in the predetermined zone is identified.

Next, a predefined distance, in the traveling direction (Y-axis), of the predetermined zone on the linear section will be described. The predefined distance in the traveling direction is, for example, 80 [m] at the maximum, assuming a distance required for the vehicle to stop at 0.2 G from a legal speed of 60 [Km/h] for general roads. Note that stopping at 0.2 G from 60 [Km/h] is deceleration at which a driver or a passenger does not feel uncomfortable. Note also that 80 [m] at the maximum is a distance determined based on the legal speed, and thus, when the legal speed increases such as the one for expressways, the maximum distance in the traveling direction also increases accordingly. Premising this, the control part 20 searches for a road geometry represented by line segments obtained from shape interpolation points in the traveling direction of the host vehicle Ve, and a point at which the lane's center line CL goes beyond either one of the left and right edge parts is determined to be an upper edge T [m]. That is, the control part 20 follows the road geometry in the traveling direction, and determines that a point at which the lane's center line CL goes beyond the left edge Xl or the right edge Xr in the vehicle width direction is a predefined distance in the traveling direction. In the example shown in FIG. 3A, a point at which the lane's center line CL goes beyond the right edge Xr is an upper edge T. Note that when the upper edge T is less than 80 [m] which is the maximum distance, a section from the upper edge T [m] to 80 [m] is a curved section which will be described later.

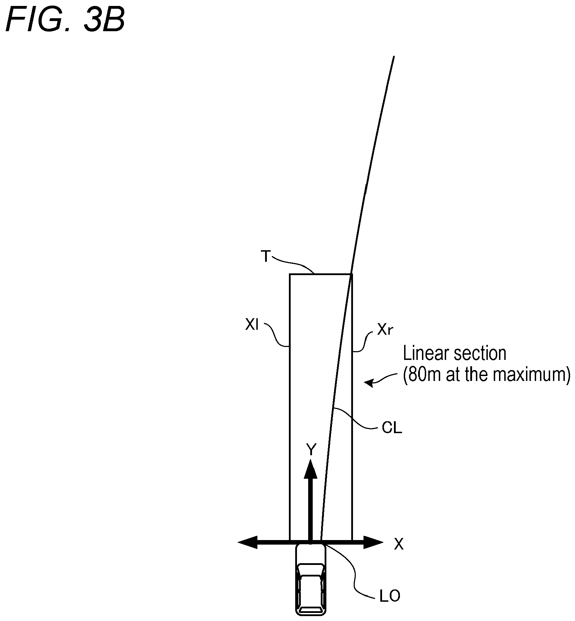

FIG. 3B is an example of identifying a road geometry from the radius of curvature, and an area within a predetermined zone is identified to be a linear section from the road geometry identified based on the radius of curvature. More specifically, the predetermined zone can be represented by a vehicle width direction (left-right direction) indicated by an X-axis, and a vehicle's traveling direction (vehicle's front-rear direction) indicated by a Y-axis. Identification of the vehicle width direction in the predetermined zone is the same as that in the example of FIG. 3A, and thus, description thereof is omitted.

A predefined distance, in the traveling direction (Y-axis), of the predetermined zone in the example of FIG. 3B will be described. The predefined distance in the traveling direction is, for example, 80 [m] at the maximum, assuming a distance required for the vehicle to stop at 0.2 G from a legal speed of 60 [Km/h] for general roads. Premising this, a state in which an arc having the radius of curvature stored in the map information 30a extends ahead of the host vehicle from the lane's center (the center between a left edge Xl and a right edge Xr) in the traveling direction of the host vehicle Ve is assumed. In FIG. 3B, a solid line extending from the lane's center LO at a front end of the vehicle indicates the arc. The control part 20 searches for a point of intersection of the arc and the left edge Xl or the right edge Xr in a forward direction along the arc, and a point at which the arc intersects either one of the left and right edge parts is determined to be an upper edge T [m]. That is, a road geometry is followed in the traveling direction based on the radius of curvature, and a point at which a lane's center line CL goes beyond the left edge Xl or the right edge Xr in the vehicle width direction is determined to be a predefined distance in the traveling direction. In the example shown in FIG. 3B, a point at which the lane's center line CL goes beyond the right edge Xr is an upper edge T. Note that, in this case, too, the same offset as that in FIG. 3A is performed. Namely, when it is identified, based on a camera image, that the center of the host vehicle (vehicle's center) does not match the lane's center, the control part 20 offsets the predefined distance in the vehicle width direction by an amount corresponding to the amount of displacement of the center of the host vehicle Ve from the lane's center. In addition, when the upper edge T is less than 80 [m] which is the maximum distance, a section from the upper edge T [m] to 80 [m] is a curved section which will be described later.

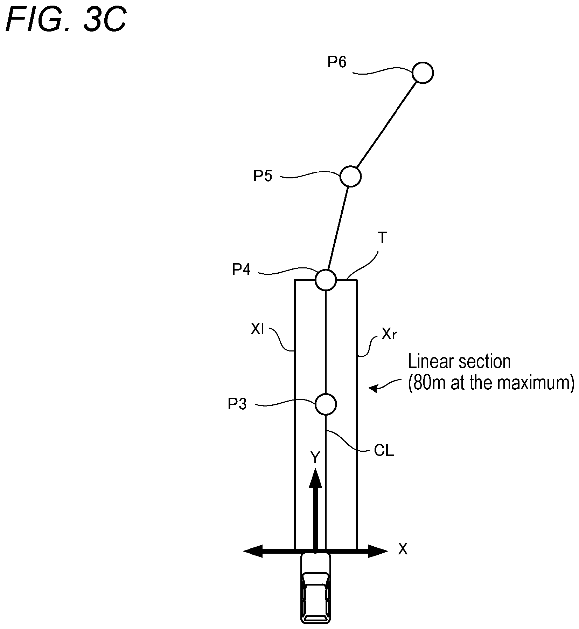

FIG. 3C is another example of identifying a road geometry from the radius of curvature, and an area within a predetermined zone is identified to be a linear section from the road geometry identified based on the radius of curvature. More specifically, the predetermined zone can be represented by a vehicle width direction (left-right direction) indicated by an X-axis, and a vehicle's traveling direction (vehicle's front-rear direction) indicated by a Y-axis. Identification of the vehicle width direction in the predetermined zone is the same as that in the example of FIG. 3A, and thus, description thereof is omitted.

A predefined distance, in the traveling direction (Y-axis), of the predetermined zone in the example of FIG. 3C will be described. The predefined distance in the traveling direction is, for example, 80 [m] at the maximum, assuming a distance required for the vehicle to stop at 0.2 G from a legal speed of 60 [Km/h] for general roads. In addition, in the example of FIG. 3C, the radius of curvature is defined for each section between adjacent shape interpolation points P3 to P6. Note that the radius of curvature for each section between the shape interpolation points is stored in advance in the map information 30a. Premising this, a road geometry is searched in the traveling direction of the host vehicle based on the radii of curvature stored in the map information 30a, and a point at which a curvature relationship reaches less than or equal to a predetermined threshold value is determined to be an upper edge T. In the above-described conditions (i.e., the road width is 1.5 [m] from the lane's center line CL to each of the left and right edges, and the predefined distance in the traveling direction is 80 [m] at the maximum, assuming a case in which the vehicle stops at 0.2 G from a legal speed of 60 [Km/h]), a point at which the radius of curvature reaches 2000 [m] or less is determined to be an upper edge T. In the example shown in FIG. 3C, the radius of curvature from the shape interpolation point P3 to the shape interpolation point P4 is 2000 [m] and the radius of curvature from the shape interpolation point P4 to the shape interpolation point P5 is 1600 [m]; that is, the point of the shape interpolation point P2 is a point (upper edge T) at which the radius of curvature reaches less than or equal to the threshold value. Note that, in this case, too, the same offset as that in FIG. 3A is performed. Namely, when it is identified, based on a camera image, that the center of the host vehicle (vehicle's center) does not match the lane's center, the control part 20 offsets the predefined distance in the vehicle width direction by an amount corresponding to the amount of displacement of the center of the host vehicle Ve from the lane's center. In addition, when the above-described conditions (the legal speed and the road width) are changed, the threshold value of the radius of curvature also changes. In addition, when the upper edge T is less than 80 [m] which is the maximum distance, a section from the upper edge T [m] to 80 [m] is a curved section which will be described later. In the above-described manner, the control part 20 identifies that the driving lane of the host vehicle Ve is a linear section.

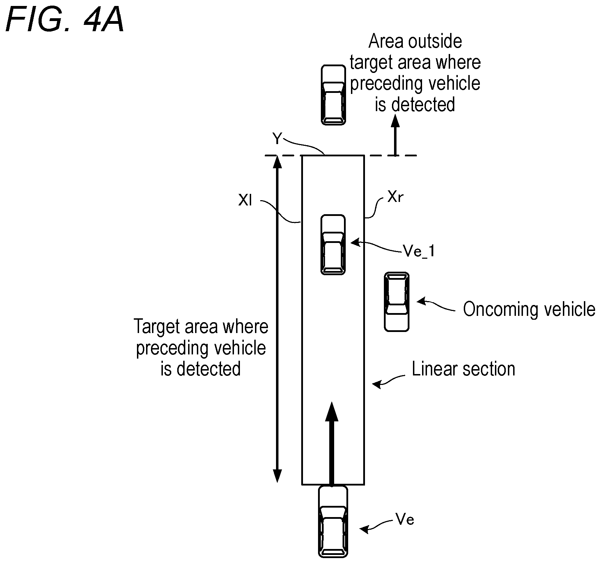

In addition, by a function of the preceding vehicle determining part 20c, when a vehicle ahead is located in the above-described predetermined zone, the control part 20 determines that the vehicle ahead is a vehicle preceding the host vehicle. FIG. 4A is a diagram for describing a process of determining whether a vehicle ahead Ve_1 is a preceding vehicle (linear logic), and when the vehicle ahead is located between the host vehicle Ve and the above-described upper edge T [m] on a linear section, the control part 20 determines that the vehicle ahead Ve_1 is a preceding vehicle. Namely, when the vehicle ahead Ve_1 is located between a left edge Xl and a right edge Xr in the vehicle width direction and is located before the upper edge T, the control part 20 determines that the vehicle ahead Ve_1 is a preceding vehicle. That is, when the vehicle ahead Ve_1 is located in the predetermined zone, the control part 20 determines that the vehicle ahead Ve_1 is a preceding vehicle.

Note that an oncoming vehicle may enter the driving lane to avoid an obstacle such as a vehicle being stopped. In addition, in a case of an intersection, another vehicle may cross the driving lane. Thus, in order to avoid an erroneous determination that such an oncoming vehicle or a vehicle that crosses the driving lane is a preceding vehicle, the control part 20 may make a determination as to a preceding vehicle, taking into account the orientation of a traveling direction or the moving direction of each vehicle. In addition, another vehicle that is not located in the predetermined zone (i.e., a vehicle located outside the left edge Xl or the right edge Xr) is not determined to be a preceding vehicle even if another vehicle is recognized in a camera image.

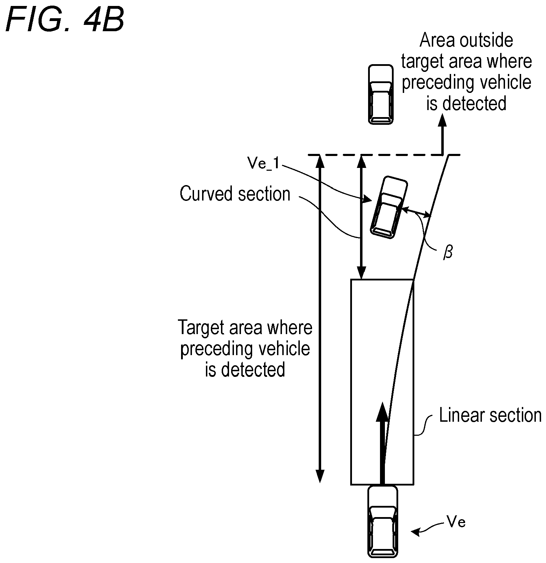

Next, with reference to FIG. 4B, a process will be described in which a curved section present ahead of the host vehicle is identified and it is determined whether a vehicle ahead Ve_1 located on the curved section is a preceding vehicle (curve logic). The control part 20 first identifies a curved section from a road geometry stored in the map information 30a. Specifically, the control part 20 identifies that an area of the above-described road geometry that is determined not to be a linear section is a curved section, the road geometry being obtained from shape interpolation points or the radius of curvature. In an example shown in FIG. 4B, a linear section and a curved section are provided in a target area (80 [m] at the maximum) where a preceding vehicle is detected in a traveling direction. Namely, a section within a maximum distance of 80 [m] from an upper edge T of the linear section serves as a curved section.

A determination as to a preceding vehicle on the curved section is made based on a lane's center line CL of a driving lane in which the host vehicle Ve travels. In the present embodiment, the lane's center line CL is the center of a general road width (e.g., 3.0 [m]), and thus, when the center of the host vehicle Ve does not match the lane's center line CL, a predefined distance in the vehicle width direction is offset (in other words, the vehicle's center is offset), by which the lane's center line CL is identified. The offset is the same as that described for the above-described linear section, and thus, description thereof is omitted here. The lane's center line CL can be identified, for example, as shown in the above-described FIGS. 3A, 3B, and 3C. Namely, in the case of FIGS. 3A and 3C, the control part 20 considers a line that connects adjacent shape interpolation points to be the lane's center line CL. In the case of FIG. 3B, the control part 20 considers an arc that extends ahead of the host vehicle Ve to be the lane's center line CL.

Then, the control part 20 determines whether a distance $\beta$ in a perpendicular direction that extends from the vehicle ahead Ve_1 to the lane's center line CL (hereinafter, also referred to as perpendicular distance $\beta$) is within a predetermined threshold value, with the vehicle ahead Ve_1 located within a maximum distance of 80 [m] from the upper edge T of the linear section. That is, in FIG. 4B, it is determined whether the perpendicular distance $\beta$ between the lane's center line CL on a curved section indicated by a double-headed arrow and the vehicle ahead Ve_1 is within the threshold value. The threshold value of the perpendicular distance $\beta$ may be determined based on the road width or the shape of the curve (i.e., the radius of curvature). In an example of this case, for example, when the road width is large, the threshold value is large compared to a case in which the road width is small. In addition, when the radius of curvature of the shape of the curve is small, the threshold value is large compared to a case in which the radius of curvature is large (in other words, the larger the radius of curvature, the closer the road geometry is to a linear geometry, and thus, the threshold value decreases). When the perpendicular distance $\beta$ is within the threshold value, the control part 20 determines that the vehicle ahead Ve_1 is a preceding vehicle. In addition, in the determination as to whether the vehicle ahead Ve_1 is a preceding vehicle, the control part 20 may also consider the traveling direction or moving direction of the vehicle ahead Ve_1. Specifically, when the vehicle ahead Ve_1 is moving in the same direction as the host vehicle Ve, the control part 20 determines that the vehicle ahead Ve_1 is a preceding vehicle. In other words, the control part 20 does not determine another vehicle that is not moving in the same direction as the host vehicle Ve to be a preceding vehicle. In addition, the control part 20 does not determine another vehicle being parked or stopped to be a preceding vehicle.

As described above, in the present embodiment, a location of another vehicle located ahead is obtained based on a relative location with respect to the host vehicle and a road geometry determined based on the map information 30a, and when the vehicle located ahead (i.e., the vehicle ahead) is located in a predetermined zone extending along the road geometry, it is determined that the vehicle ahead is a vehicle preceding the host vehicle. That is, the vehicle ahead is determined to be a preceding vehicle. By this, compared to, for example, the conventional configuration (Patent Literature 1 cited above) in which it is determined, by image recognition by the in-vehicle camera, that a vehicle sandwiched between the same white lines as boundaries or white lines in a driving lane in which the host vehicle travels is a preceding vehicle, a vehicle ahead can be accurately determined to be a preceding vehicle. Namely, when, as described above, lane boundaries are detected by image recognition by the in-vehicle camera, the accuracy of detection may decrease at a distant location, a curve, etc., but in the present embodiment, even in such circumstances, by identifying a location of a vehicle ahead using a road geometry as a parameter, a reduction in the accuracy of detection of a preceding vehicle can be suppressed. In addition, in the present embodiment, by performing control by the control part 20 such as that described above, even when a vehicle ahead is located far away or is located on a curved section upon performing control for following a preceding vehicle, occurrence of an inconvenience, e.g., detection of a preceding vehicle is delayed or a vehicle determined to be a preceding vehicle just a moment ago is no longer determined to be a preceding vehicle, can be suppressed. As such, by identifying a vehicle located ahead from a road geometry, in addition to image recognition by the in-vehicle camera, it becomes possible to detect a preceding vehicle more accurately compared to the conventionally known system.

(2) Preceding vehicle determination process:

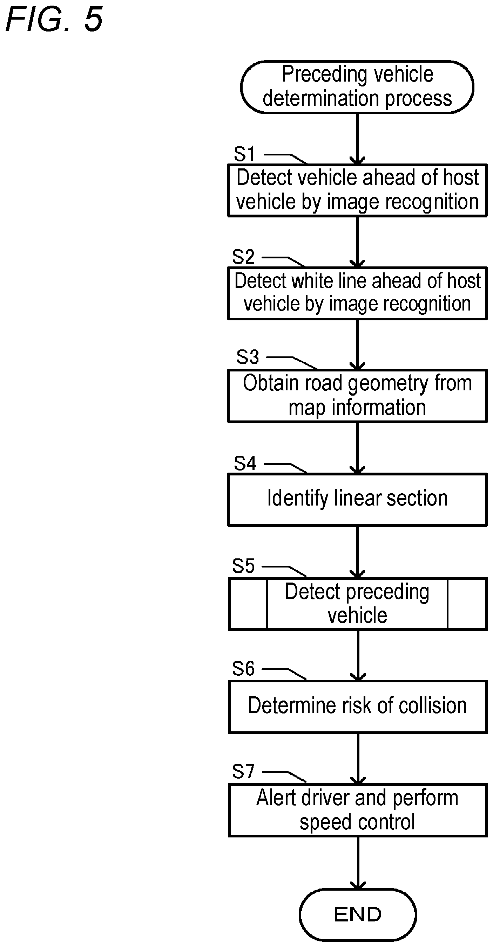

Next, a preceding vehicle determination process performed by the control part 20 will be described. FIG. 5 is a flowchart showing an example of a preceding vehicle determination process performed by the control part 20. In the present embodiment, the preceding vehicle determination process is performed, for example, upon performing following travel in which the host vehicle follows a preceding vehicle (auto cruise control: ACC) or upon performing autonomous driving. Note that it is premised that upon starting the flowchart shown in this FIG. 5, a current location of the host vehicle is obtained. For the current location of the host vehicle, a current location of the host vehicle in a map coordinate system is obtained based on output signals from the GNSS receiving part 41, the vehicle speed sensor 42, and the gyro sensor 43 and map information. Details of control will be specifically described below using the flowchart.

First, the control part 20 detects a vehicle located ahead of the host vehicle by image recognition by the camera 40 (step S1). Specifically, by a function of the vehicle-ahead's location obtaining part 21a, the control part 20 obtains a relative orientation $\theta$ of another vehicle with respect to the host vehicle and a straight-line distance D. As described in the aforementioned FIGS. 2A and 2B, the control part 20 calculates representative coordinates Bo from the coordinates of two diagonal vertices of a bounding box B. Then, the control part 20 obtains a relative orientation of a vehicle ahead shown at the representative coordinates Bo of the bounding box B, based on a correspondence between each set of coordinates in the camera image I and a relative orientation with respect to the host vehicle. In addition, the control part 20 calculates a height h of the bounding box B from the coordinates of the two diagonal vertices of the bounding box B. In addition, the control part 20 obtains a type of the vehicle in the bounding box. Then, based on a correspondence based on the type of vehicle which is a correspondence between the number of pixels representing the height h of a bounding box B and a straight-line distance D to a vehicle in the bounding box, the control part 20 calculates a straight-line distance D associated with the height h of the bounding box.

Furthermore, the control part 20 recognizes a vehicle ahead located ahead in a plurality of camera images, and identifies an amount of movement of the recognized vehicle ahead. Then, the control part 20 determines a relative speed of the vehicle ahead with respect to the host vehicle from a time change between the plurality of camera images and the amount of movement of the vehicle ahead, and adds the speed of the host vehicle, thereby detecting a speed of the vehicle ahead. In addition, the control part 20 detects the traveling direction and moving direction of the vehicle ahead.

Then, the control part 20 detects a lane boundary such as a white line ahead of the host vehicle by image recognition by the camera 40 (step S2). Specifically, the control part 20 divides a shot camera image into at least a road region and a non-road region including lane boundaries such as white lines and orange lines, by performing, for example, an image recognition process that uses deep learning, more specifically, semantic segmentation, on the camera image, thereby detecting a white line. In addition, the control part 20 obtains, based on the camera image, a type of the white line (a solid line or a broken line), the location, in a driving lane, of the host vehicle, and coordinate information of each pixel in the camera image.

Then, the control part 20 identifies a road geometry from the map information (step S3). Namely, by a function of the map information obtaining part 21b, the control part 20 identifies a road geometry. Specifically, a road geometry is identified from the node data, shape interpolation point data, and link data stored in the map information 30a. Alternatively, a road geometry is identified from the radius of curvature.

Then, the control part 20 identifies a linear section of the driving lane (step S4). Namely, by a function of the preceding vehicle determining part 21c, the control part 20 identifies a linear section of the driving lane that is determined from the above-described right edge Xr, left edge Xl, and upper edge T.

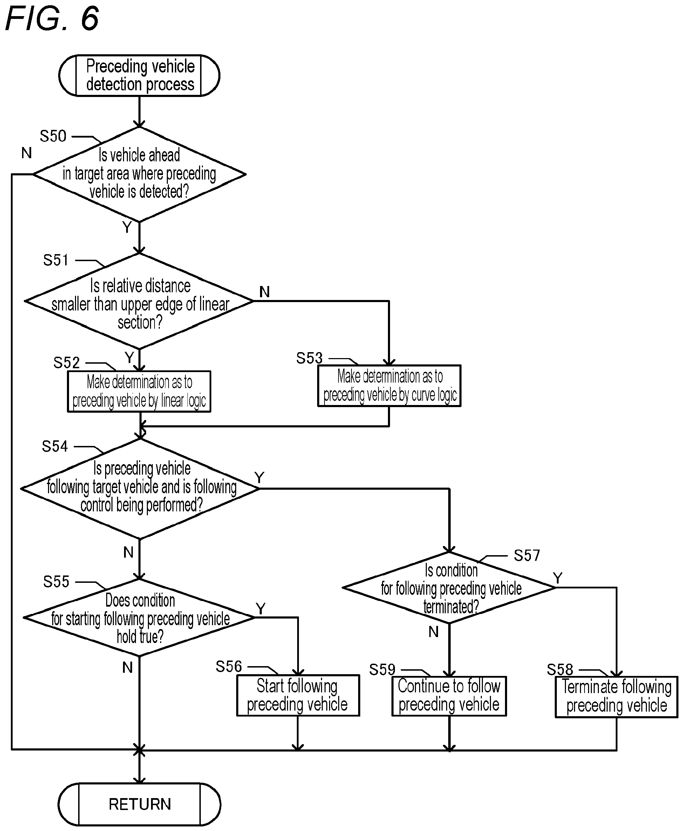

Then, the control part 20 detects a preceding vehicle (step S5). Namely, by a function of the preceding vehicle determining part 21c, the control part 20 determines whether the vehicle ahead that is detected at step S1 is a preceding vehicle. FIG. 6 is a subroutine of step S5 and is details of a process performed upon detecting a preceding vehicle (preceding vehicle detection process). The subroutine of FIG. 6 will be described below.

First, the control part 20 determines whether the relative location of the vehicle ahead, for which a determination as to a preceding vehicle is made, with respect to the host vehicle is in a target area where a preceding vehicle is detected (step S50). Namely, the control part 20 determines whether the vehicle ahead is located within a maximum distance of 80 [m] in a vehicle longitudinal direction from the host vehicle in the above-described traveling direction. If a negative determination is made at this step S50, then processing returns without performing control which will be described hereinafter. Note that the maximum distance of 80 [m] is a distance for a case in which the vehicle stops at 0.2 G from a legal speed of 60 [Km/h], and changes depending on the legal speed or deceleration.

On the other hand, if an affirmative determination is made at this step S50, i.e., if it is determined that the vehicle ahead is located within a maximum distance of 80 [m] from the host vehicle in the traveling direction, then the control part 20 determines whether the relative distance of the vehicle ahead in the vehicle longitudinal direction with respect to the host vehicle is smaller than the upper edge T [m] of the linear section (step S51). Namely, the control part 20 determines whether the vehicle ahead is present on the linear section. In other words, the control part 20 determines at which location, the linear section or a curved section, the vehicle ahead is present.

Thus, if an affirmative determination is made at this step S51, i.e., if a lane in which the vehicle ahead travels is on the linear section, then the control part 20 makes a determination as to a preceding vehicle by linear logic (step S52). Namely, the control part 20 determines whether the vehicle ahead corresponds to a preceding vehicle, by linear logic described in the above-described FIG. 4A. That is, when the control part 20 determines, from the road geometry, that the vehicle ahead is located within the predetermined zone, the control part 20 determines that the vehicle ahead is a preceding vehicle.

On the other hand, if a negative determination is made at step S51, i.e., if the lane in which the vehicle ahead travels is not on the linear section, in other words, if the lane is on the curved section, then the control part 20 makes a determination as to a preceding vehicle by curve logic (step S53). Namely, the control part 20 determines whether the vehicle ahead is a preceding vehicle, based on whether a perpendicular distance $\beta$ extending from the vehicle ahead to a lane's center line CL is within a threshold value by curve logic described in the above-described FIG. 4B. That is, when the control part 20 determines, from the road geometry, that the vehicle ahead is located within the predetermined zone, the control part 20 determines that the vehicle ahead is a preceding vehicle.

Then, the control part 20 determines whether the vehicle ahead is a following target vehicle and whether the host vehicle is already performing following travel (step S54). Namely, the control part 20 determines whether the vehicle ahead that is determined to be a preceding vehicle by the linear logic at step S52 or the curve logic at step S53 is a target for following travel, and determines whether the host vehicle is currently following the preceding vehicle. If a negative determination is made at this step S54, i.e., if the control part 20 determines that the vehicle ahead is not a following target vehicle or that the host vehicle is not performing following travel, then the control part 20 determines whether a condition for starting following the preceding vehicle holds true (step S55).

When a negative determination is made at the above-described step S54, the host vehicle is not performing at least control for following travel. Thus, at this step S55, it is determined whether to start following travel in which the host vehicle follows the preceding vehicle. Specifically, when the control part 20 continuously determines for a predetermined period of time (about a few seconds) which is determined in advance that the vehicle ahead is a preceding vehicle, based on the linear logic at step S52 or the curve logic at step S53, the control part 20 determines that the condition for starting following control holds true, and starts following the preceding vehicle (step S56).

On the other hand, if the control part 20 determines that the vehicle ahead is not a preceding vehicle, based on the linear logic at step S52 or the curve logic at step S53 (e.g., if it is not continuously determined for a predetermined period of time which is determined in advance that the vehicle ahead is a preceding vehicle), then the control part 20 terminates exemplary control shown in this FIG. 6, and processing returns.

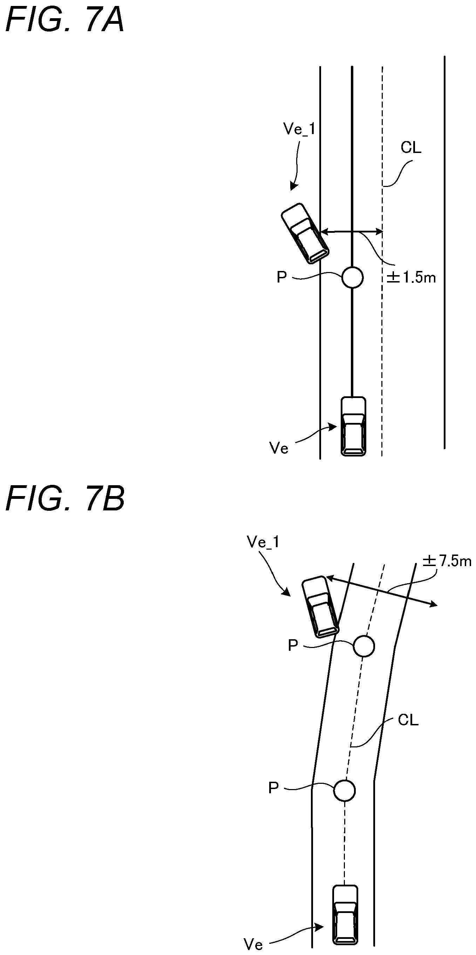

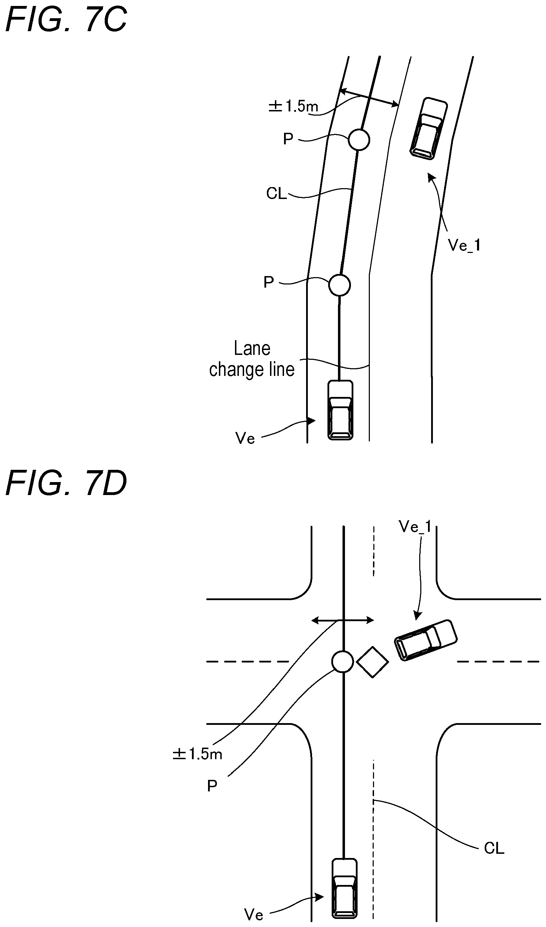

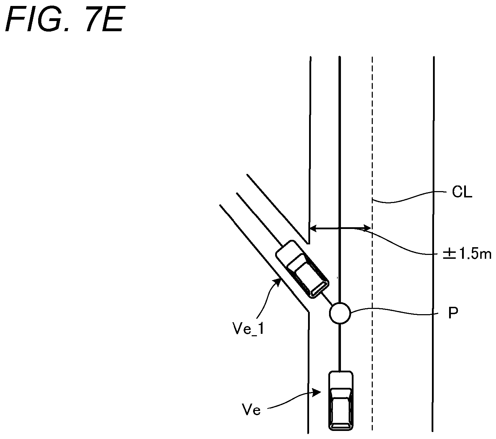

On the other hand, if an affirmative determination is made at the above-described step S54, i.e., if the control part 20 determines that the vehicle ahead is a following target vehicle and that the host vehicle is already performing control for following travel, then the control part 20 determines whether a condition for terminating the control for following the preceding vehicle holds true (step S57). FIGS. 7 (FIGS. 7A to 7E) are diagrams for describing a condition for terminating the control for following the preceding vehicle. Note that reference sign P shown in FIGS. 7A to 7E represents a node or a shape interpolation point. An example of FIG. 7A is an example of a case in which a preceding vehicle Ve_1 deviates from a driving lane during traveling on a linear section with a road width of 3.0 [m]. In the example shown in FIG. 7A, the vehicle width is assumed, and with 1.5 [m] in each of the left and right directions from a lane's center line CL being a threshold value, when the preceding vehicle Ve_1 deviates from the driving lane, a host vehicle Ve terminates control for following travel.

In addition, an example of FIG. 7B is an example of a case in which a preceding vehicle Ve_1 deviates from a driving lane during traveling on a curved section with one lane in each direction. In the example shown in FIG. 7B, the accuracy of image recognition by the camera 40 for the curved section is assumed, and with 7.5 [m] in each of the left and right directions from a lane's center line CL being a threshold value, when the preceding vehicle Ve_1 deviates from the driving lane, the host vehicle Ve terminates control for following travel.

In addition, an example of FIG. 7C is an example of a case in which a preceding vehicle Ve_1 deviates from a driving lane during traveling on a curved section with two lanes in each direction (including deviation from one of the two lanes in each direction to the other lane). In the example shown in FIG. 7C, the vehicle width (e.g., a road width of 3.0 [m]) is assumed, and with 1.5 [m] in each of the left and right directions from a lane's center line CL being a threshold value, when the preceding vehicle Ve_1 deviates from the driving lane, the host vehicle Ve terminates control for following travel.

In addition, an example of FIG. 7D is an example of a case in which a preceding vehicle Ve_1 deviates from a driving lane during traveling near an intersection. In the example shown in FIG. 7D, the vehicle width (e.g., a road width of 3.0 [m]) is assumed, and with 1.5 [m] in each of the left and right directions from a lane's center line CL being a threshold value, when the preceding vehicle Ve_1 deviates from the driving lane by, for example, turning right or left at the intersection, the host vehicle Ve terminates control for following travel.

In addition, an example of FIG. 7E is an example of a case in which a preceding vehicle Ve_1 deviates from a driving lane during traveling near a narrow-angle fork. In the example shown in FIG. 7E, the vehicle width (e.g., a road width of 3.0 [m]) is assumed, and with 1.5 [m] in each of the left and right directions from a lane's center line CL being a threshold value, when the preceding vehicle Ve_1 deviates from the driving lane by, for example, turning right or left at the intersection, the host vehicle Ve terminates control for following travel. Note that in the above-described FIGS. 7A to 7E, each threshold value for determining deviation of the preceding vehicle Ve_1 from the driving lane is an example and may be changed as appropriate, depending on the road geometry or driving scene.

As such, when the preceding vehicle deviates from the driving lane, the control part 20 determines that the condition for terminating following travel control by the host vehicle holds true (Y at step S57), and terminates the control for following the preceding vehicle (step S58). On the other hand, when the preceding vehicle does not deviate from the driving lane or when it is continuously determined that the vehicle ahead is a preceding vehicle (N at step S57), the control part 20 continues to follow the preceding vehicle (step S59).

Then, referring back to the flowchart of FIG. 5, when the control part 20 completes the preceding vehicle detection process, processing proceeds to step S6. At step S6, the control part 20 determines the risk of collision. Namely, the control part 20 determines the risk of collision between the host vehicle and the preceding vehicle, based on the location of the preceding vehicle, the location of the host vehicle, the distance between the host vehicle and the preceding vehicle in the driving lane, the moving speed of the preceding vehicle, the moving speed of the host vehicle, and the like. For example, the control part 20 determines whether there is a possibility that the distance between the host vehicle and the preceding vehicle in a direction in which the driving lane extends reaches a predetermined distance which is determined in advance during a period until a predetermined time later (a few seconds to a few tens of seconds later) when the host vehicle and the preceding vehicle move with their moving speeds maintained. When it is determined that there is a possibility that the distance between the vehicles reaches within the predetermined distance during the period until the predetermined time later, the control part 20 determines that there is a risk of collision of the host vehicle with the preceding vehicle. On the other hand, when it is determined that there is no possibility that the distance between the vehicles reaches within the predetermined distance during the period until the predetermined time later, the control part 20 determines that there is no risk of collision of the host vehicle with the preceding vehicle.

Then, the control part 20 provides a driver with guidance based on the determination as to the risk of collision at step S6. When there is a risk of collision, the control part 20 provides the driver with guidance on a possible risk of collision with another vehicle by, for example, an alert sound, and performs vehicle speed control (step S7). For example, the control part 20 outputs guidance on the risk of collision to the user I/F part 44. The user I/F part 44 may, for example, allow the speaker to produce an alert sound or allow a head-up display to display graphics or characters that attract attention. In addition, in order to perform vehicle speed control, the control part 20 reduces output from a drive power source such as an engine or a motor by, for example, reducing the torque of the drive power source or reducing the number of revolutions of the drive power source. This makes it possible to avoid or suppress the risk of collision between the host vehicle and the preceding vehicle. Note that when there is no risk of collision in the determination at step S6, exemplary control of FIG. 5 may be terminated without performing step S7. In addition, when the condition for starting following the preceding vehicle is not satisfied in the above-described subroutine of FIG. 6 (N at step S55), since there is no preceding vehicle, there is no risk of collision, and thus, the exemplary control shown in FIG. 5 may be terminated without performing step S6 and step S7.

As such, in the present embodiment, a vehicle ahead is detected based on a road geometry (i.e., based on whether the vehicle ahead is located in a predetermined zone that extends along the road geometry), in addition to detection of the vehicle ahead by image recognition by the camera 40. Then, when the vehicle ahead is detected in the predetermined zone, it is determined that the vehicle ahead is a preceding vehicle, and following control is performed. Hence, even under circumstances where the accuracy of image recognition by the camera 40 decreases due to the preceding vehicle being located relatively far away or traveling on a curved section, a determination as to the preceding vehicle can be accurately made.

(3) Other embodiments:

The above-described embodiment is an example for implementing the present invention, and various other embodiments can also be adopted. For example, the preceding vehicle determination system may be a device mounted on a vehicle, etc., or may be a device implemented by a portable terminal, or may be a system implemented by a plurality of devices (e.g., a client and a server). Furthermore, at least some of the vehicle-ahead's location obtaining part 21a, the map information obtaining part 21b, and the preceding vehicle determining part 21c that are included in the preceding vehicle determination system may be separately present in a plurality of devices. Needless to say, some components of the above-described embodiment may be omitted, or the order of processes may be changed or omitted.

In addition, in the above-described embodiment, the predetermined zone extending from a road geometry is described as a zone with respect to the lane's center line CL, i.e., a zone with a distance in a perpendicular direction from the lane's center line or a zone including a predefined distance in a vehicle width direction from the lane's center line and a predefined distance in a traveling direction from a current location of the host vehicle, but the predetermined zone is not limited thereto. For example, the predetermined zone may be identified with respect to a lane boundary. Specifically, the control part 20 may determine that a zone including a zone sandwiched between vehicle boundaries (white lines or orange lines) adjacent to a driving lane in which the host vehicle travels and a predefined distance in a traveling direction from a current location of the host vehicle is the predetermined zone. Namely, a reference line for the predetermined zone is not limited to the lane's center line (the center line of the driving lane), and the predetermined zone may be defined with respect to the vehicle boundary. In either case, the same predetermined zone is obtained.

The vehicle-ahead's location obtaining part may be configured in any manner as long as the vehicle-ahead's location obtaining part can obtain a relative location of a vehicle located ahead of the host vehicle with respect to the host vehicle. The relative location with respect to the host vehicle is information indicating the location of another vehicle in a coordinate system defined by the host vehicle. The relative location of the vehicle ahead with respect to the host vehicle may be represented by, for example, a location on a plane including a vehicle longitudinal axis and a vehicle width axis of a vehicle coordinate system or a location in a three-dimensional coordinate system. The relative location may be obtained based on output from various sensors such as a camera, radar, and LIDAR that shoot an area around the host vehicle. In addition, the relative location of another vehicle present not only ahead of the host vehicle but also on the side of or behind the host vehicle may be obtained. In addition, obtaining of the relative location of a vehicle ahead from an image shot with the camera may be performed based on the size or location of a bounding box that encloses the vehicle ahead in the image, or may be performed by other methods. For example, obtaining of the relative location of a vehicle ahead may be performed using a model that is machine-trained to output a distance to a vehicle ahead included in an inputted image and a relative orientation of the vehicle ahead.

The map information obtaining part may be configured in any manner as long as the map information obtaining part can obtain map information including a road geometry of a road on which a vehicle travels. The road geometry includes, for example, the radius of curvature of the road, but even in the same road, the radius of curvature varies between lanes (e.g., between an inside one and an outside one of a plurality of lanes), and thus, the radius of curvature may be corrected lane by lane based on the road width. In addition, as described above, the road geometry is identified from node data, shape interpolation point data, and link data that are stored in the map information 30a. Alternatively, the road geometry is identified from the radius of curvature, but in addition, the road geometry may be identified from map information generated based on a high-precision map. Note that the high-precision map includes map information with higher precision than normal map information, and is installed on, for example, an autonomous driving vehicle. When the map information generated based on a high-precision map is used, a map geometry, the radius of curvature, vehicle width, a lane's center line, the location of a lane boundary, etc., for each lane can be more specifically obtained.

The preceding vehicle determining part may be configured in any manner as long as the preceding vehicle determining part can determine, when a vehicle ahead is located in a predetermined zone extending along a road geometry and ahead of the vehicle, that the vehicle ahead is a preceding vehicle. Namely, the preceding vehicle determining part may be configured in any manner as long as the preceding vehicle determining part can identify a predetermined zone based on map information including a road geometry, instead of identifying, based on an image shot with the camera, a predetermined zone in which a preceding vehicle can be dynamically present.

Furthermore, a technique for determining, as in the present invention, whether a vehicle ahead is a preceding vehicle based on the location of the host vehicle, the relative location of the vehicle ahead with respect to the host vehicle, and a road geometry is also applicable as a method or a program executed by a computer. In addition, the system, the program, and the method such as those described above may be implemented as a single device or may be implemented by using a component shared with each part included in a vehicle, and include various modes. In addition, changes can be made as appropriate, e.g., a part is software and a part is hardware. Furthermore, the invention is also feasible as a recording medium for a program that controls the system. Needless to say, the recording medium for the program may be a magnetic recording medium or may be a semiconductor memory, and any recording medium to be developed in the future can also be considered exactly in the same manner.

REFERENCE SIGNS LIST

10: Navigation system, 20: Control part, 21: Preceding vehicle determination program, 21a: Vehicle-ahead's relative location obtaining part, 21b: Map information obtaining part, 21c: Preceding vehicle determining part, 30: Recording medium, 30a: Map information, 40: Camera, 41: GNSS receiving part, 42: Vehicle speed sensor, 43: Gyro sensor, 44: User I/F part, CL: Lane's center line (the center line of a driving lane), Ve: Vehicle (host vehicle), and Ve_1: Vehicle ahead (preceding vehicle).

**Claims**

1. A preceding vehicle determination system comprising:

   a vehicle-ahead's location obtaining part that obtains a relative location of a vehicle ahead with respect to a vehicle, the vehicle ahead being located ahead of the vehicle;
   a map information obtaining part that obtains map information including a road geometry of a road on which the vehicle travels; and
   a preceding vehicle determining part that determines, when the vehicle ahead is located in a predetermined zone, that the vehicle ahead is a vehicle preceding the vehicle, the predetermined zone extending along the road geometry and ahead of the vehicle.

2. The preceding vehicle determination system according to claim 1, wherein the predetermined zone is a zone with a distance in a perpendicular direction that extends from the vehicle ahead to a center line of a driving lane.

3. The preceding vehicle determination system according to claim 1, wherein the predetermined zone is a zone including a predefined distance in a vehicle width direction from a center line of a driving lane in which the vehicle travels; and a predefined distance in a traveling direction from a current location of the vehicle.

4. The preceding vehicle determination system according to claim 2 or 3, wherein when a vehicle's center in a vehicle width direction of the vehicle is displaced from the center line of the driving lane, the preceding vehicle determining part offsets a predefined distance in the vehicle width direction, based on an amount corresponding to the displacement.

5. The preceding vehicle determination system according to any one of claims 1 to 4, wherein when the vehicle ahead is located in the predetermined zone, the preceding vehicle determining part follows.

6. The preceding vehicle determination system according to claim 1, wherein the predetermined zone includes a zone sandwiched between lane boundaries adjacent to a driving lane in which the vehicle travels; and a zone with a predefined distance in a traveling direction from a current location of the vehicle.

FIG. 1

Navigation system — 10

Preceding vehicle detection program — 21

Vehicle-ahead's location obtaining part — 21a

Map information obtaining part — 21b

Preceding vehicle determining part — 21c

Control part — 20

Map information — 30a

30

40 — Camera

41 — GNSS receiving part

42 — Vehicle speed sensor

43 — Gyro sensor

44 — User I/F part

EP 4 378 782 A1

*FIG. 2A*

*FIG. 2B*

# FIG. 3A

# FIG. 3B

T

Xl

Xr

Linear section
(80m at the maximum)

CL

Y

X

LO

# FIG. 3C

Linear section
(80m at the maximum)

# FIG. 4A

Area outside
target area where
preceding vehicle
is detected

Y

Xl

Xr

Ve_1

Oncoming vehicle

Target area where
preceding vehicle
is detected

Linear section

Ve

# FIG. 4B

Area outside
target area where
preceding vehicle
is detected

Ve_1

Curved section

Target area where
preceding vehicle
is detected

β

Linear section

Ve

# FIG. 5

```
        ╭─────────────────────╮
        │  Preceding vehicle   │
        │ determination process│
        ╰─────────────────────╯
                    │
   S1 ──┐           ▼
     ┌───────────────────────────┐
     │ Detect vehicle ahead of host│
     │ vehicle by image recognition│
     └───────────────────────────┘
                    │
   S2 ──┐           ▼
     ┌───────────────────────────┐
     │ Detect white line ahead of host│
     │ vehicle by image recognition│
     └───────────────────────────┘
                    │
   S3 ──┐           ▼
     ┌───────────────────────────┐
     │  Obtain road geometry from │
     │       map information      │
     └───────────────────────────┘
                    │
   S4 ──┐           ▼
     ┌───────────────────────────┐
     │    Identify linear section │
     └───────────────────────────┘
                    │
   S5 ──┐           ▼
     ┌───┬───────────────┬───────┐
     │   │ Detect preceding│       │
     │   │    vehicle      │       │
     └───┴───────────────┴───────┘
                    │
   S6 ──┐           ▼
     ┌───────────────────────────┐
     │   Determine risk of collision│
     └───────────────────────────┘
                    │
   S7 ──┐           ▼
     ┌───────────────────────────┐
     │  Alert driver and perform  │
     │       speed control        │
     └───────────────────────────┘
                    │
                    ▼
              ╭───────────╮
              │    END    │
              ╰───────────╯
```

## FIG. 6

Preceding vehicle detection process

S50 — Is vehicle ahead in target area where preceding vehicle is detected?
- N →
- Y ↓

S51 — Is relative distance smaller than upper edge of linear section?
- N →
- Y ↓

S52 — Make determination as to preceding vehicle by linear logic

S53 — Make determination as to preceding vehicle by curve logic

S54 — Is preceding vehicle following target vehicle and is following control being performed?
- Y →
- N ↓

S55 — Does condition for starting following preceding vehicle hold true?
- Y →
- N ↓

S56 — Start following preceding vehicle

S57 — Is condition for following preceding vehicle terminated?
- Y →
- N ↓

S58 — Terminate following preceding vehicle

S59 — Continue to follow preceding vehicle

RETURN

## FIG. 7A

Ve_1

CL

P

±1.5m

Ve

## FIG. 7B

Ve_1

±7.5m

P

CL

P

Ve

## FIG. 7C

±1.5m

P

CL

Ve_1

P

Lane
change line

Ve

## FIG. 7D

Ve_1

±1.5m

P

CL

Ve

## FIG. 7E

CL

±1.5m

P

Ve_1

Ve

## INTERNATIONAL SEARCH REPORT

| International application No. |
| --- |
| **PCT/JP2022/036618** |

**A. CLASSIFICATION OF SUBJECT MATTER**

***B60W 30/14***(2006.01)i; ***G08G 1/16***(2006.01)i
FI: B60W30/14; G08G1/16 C; B60W60/00

According to International Patent Classification (IPC) or to both national classification and IPC

**B. FIELDS SEARCHED**

Minimum documentation searched (classification system followed by classification symbols)

B60W30/00-60/00; G08G1/00-1/16; B62D6/00-6/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2009-126190 A (TOYOTA MOTOR CORP) 11 June 2009 (2009-06-11) paragraphs [0014], [0021], [0028], [0032] | 1-3, 5-6 |
| Y | | 1-6 |
| Y | JP 2001-343460 A (MITSUBISHI ELECTRIC CORP) 14 December 2001 (2001-12-14) paragraphs [0001], [0011], [0014], [0017], [0022], fig. 2-3 | 1-6 |
| Y | JP 2009-2697 A (TOYOTA MOTOR CORP) 08 January 2009 (2009-01-08) paragraphs [0022], [0025], [0033], [0039], [0047], [0050] | 4 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 December 2022** | **13 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| | International application No. |
|---|---|
| | **PCT/JP2022/036618** |

| Patent document cited in search report | | | Publication date (day/month/year) | Patent family member(s) | Publication date (day/month/year) |
|---|---|---|---|---|---|
| JP | 2009-126190 | A | 11 June 2009 | (Family: none) | |
| JP | 2001-343460 | A | 14 December 2001 | (Family: none) | |
| JP | 2009-2697 | A | 08 January 2009 | (Family: none) | |

Form PCT/ISA/210 (patent family annex) (January 2015)

**EP 4 378 782 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6589760 B